# EUROPÄISCHE PATENTSCHRIFT

(11) **EP 3 472 809 B1**
(45) Veröffentlichungstag und Bekanntmachung des Hinweises auf die Patenterteilung: **04.11.2020**
(21) Anmeldenummer: 17724020.7
(22) Anmeldetag: 16.05.2017
(51) Int. Cl.: G07C 9/00, B60R 25/045, B60R 25/24

(54) **VERFAHREN ZUR KONTROLLE DES ZUGRIFFS AUF EIN KRAFTFAHRZEUG**
METHOD FOR CONTROLLING VEHICLE ACCESS
PROCÉDÉ DE COMMANDE DE L'ACCÈS À UN VÉHICULE

(30) Priorität: 20.06.2016 DE 102016111276
(43) Veröffentlichungstag der Anmeldung: 24.04.2019
(73) Patentinhaber: HUF Hülsbeck & Fürst GmbH & Co. KG, 42551 Velbert (DE)
(72) Erfinder: NEUHOFF, Stefan, 45239 Essen (DE)
(74) Vertreter: Zenz Patentanwälte Partnerschaft mbB
(86) Internationale Anmeldenummer: PCT/EP2017/061754
(87) Internationale Veröffentlichungsnummer: WO 2017/220260

(56) Entgegenhaltungen:
- EP-A2- 0 980 800
- DE-A1- 10 032 936
- DE-A1-102005 039 562
- DE-A1-102006 008 140
- DE-B3-102005 013 910
- US-A1- 2013 063 247

## Beschreibung

Die Erfindung betrifft ein Verfahren zur Kontrolle des Zugriffs auf ein Kraftfahrzeug. Insbesondere betrifft die Erfindung ein Verfahren zur Prüfung der Legitimation eines Zugriffs, wobei ein schlüsselloses Zugangssystem (keyless-entry) eingesetzt wird.

Schlüssellose Zugangssysteme ermöglichen es legitimen Benutzern eines Fahrzeugs, ohne mechanische Einwirkung auf das Kraftfahrzeug und allein durch die Annäherung drahtloser Kommunikationsmittel an das Fahrzeug, eine Legitimationsprüfung im Fahrzeug in Gang zu setzen. Der Benutzer trägt einen ID-Geber (z.B. einen Funk-Fahrzeugschlüssel) mit einer darin integrierten Steuereinheit mit sich. Die ID-Geber-seitige Steuereinheit ist mit Sende- Empfangsmitteln gekoppelt. Auf Fahrzeugseite ist eine fahrzeugseitige Steuereinrichtung mit zugehörigen Sende-Empfangsmitteln vorhanden. ID-Geber und Fahrzeug tauschen Informationen zwischen den jeweiligen Steuereinheiten aus. Häufig werden für verschiedene Funktionen Signale sowohl im Niederfrequenzbereich (wenige bis einige Hundert KHz) als auch im Hochfrequenzbereich (einige Hundert MHz bis einige GHz) übermittelt. Die Signalübermittlung im Niederfrequenzbereich ist dabei von kürzerer Reichweite als im Hochfrequenzbereich. Damit soll u.a. sichergestellt werden, dass nur Benutzer mit passenden ID-Gebern in der unmittelbaren Umgebung des Fahrzeuges Zugang zum Fahrzeug erhalten.

Es ist bekannt, dass der Zugang zum Fahrzeug durch sogenannte Relay-Station-Attacken kompromittiert werden kann. Beispielsweise offenbart die US 2006/0255909 A1 ein System zur Verhinderung solcher Relay-Station-Attacken. Bei einem derartigen Angriff wird eine größere Entfernung zwischen einem ID-Geber (z.B. in Gestalt eines Fahrzeugschlüssels) und dem Fahrzeug überbrückt, obwohl die Zugangskontrolle auf diese Entfernung eigentlich nicht erfolgreich abgewickelt werden sollte. Beispielsweise nähern sich dafür zwei Personen, jeweils ausgestattet mit Funk-Verlängerungsstationen den aktiven Komponenten des Zugangssystems. Eine Person nähert sich dabei dem Fahrzeug, während eine andere Person sich dem ID-Geber annähert. Beide Personen tragen elektronische Funk-Verlängerungsstationen, die untereinander in einer Hochfrequenzkommunikation stehen. Außerdem sind diese Verlängerungsstationen in der Lage, sowohl niederfrequente als auch hochfrequente Signale vom Fahrzeug bzw. vom ID-Geber zu empfangen. Diese Signale werden in einer hochfrequenten Nachricht an die jeweils andere Station zu übermitteln und von dort wiederum als niederfrequente oder hochfrequente Signale ausgegeben.

Wie in der vorgenannten Druckschrift beschrieben führt dies dazu, dass beispielsweise ein Zugang zum Fahrzeug erlaubt wird, obwohl ein Benutzer mit einem legitimen ID-Geber weit vom zugehörigen Fahrzeug entfernt steht. Der gesamte niederfrequente (LF) Informationsfluss und auch die nachfolgende hochfrequente Kommunikation zwischen ID-Geber und Fahrzeug wird über die beiden Verlängerungsstationen als Relay-Stationen verlängert.

Das Dokument WO 2015/084852 offenbart ein System und Verfahren, welches die Verlängerung durch solche Relay-Attacken verhindern soll. Dieses System wirkt durch die Analyse von Feldvektoren der Signalfelder und den Winkeln zwischen den Feldvektoren, wobei die zugehörigen Felder durch mehrere Antennen an einem Fahrzeug erzeugt werden. Die Antennen an dem Fahrzeug werden zeitversetzt oder auch zeitgleich aktiviert, um am Ort eines ID-Gebers empfangen und analysiert zu werden. Der ID-Geber verfügt dazu über 3D-Antennen. Derartige 3D-Antennen sind Standardbauteile, die häufig in ID-Gebern zum Einsatz kommen. Diese 3D-Antennenmodule weisen mehrere Antennenspulen in unterschiedlichen Raumorientierungen auf und können in drei unterschiedlichen Raumrichtungen Signalstärken von elektromagnetischen Signalen erfassen. In dem genannten Dokument werden verschiedene Antennen am Fahrzeug aktiviert, die zwangsläufig unterschiedliche Orientierungen zu dem mobilen ID-Geber aufweisen. Es wird daraufhin überprüft, ob die jeweiligen, in verschiedenen Raumrichtungen empfangenen Signalstärken konsistent mit den Antennenpositionen am Fahrzeug sind. Außerdem können gezielt Sendestärken der Antennen variiert werden, um Winkelverschiebungen des resultierenden Feldvektors hervorzurufen. Findet eine Verlängerung über eine oder mehrere Relay-Stationen statt, ist eine Beibehaltung dieser Informationen zur Orientierung des elektromagnetischen Feldes kaum möglich. Selbst wenn die Information bei der ersten, fahrzeugnahen Relay-Station erfasst würde, ist die Lage der Relay-Stationen zueinander nicht vorbestimmbar und außerdem auch nicht die Lage des ID-Gebers zu der ID-Geber-seitigen Relay-Station. Der Schlüssel wird entsprechend eine Inkonsistenz zwischen den bekannten Lagen der Antennen am Fahrzeug und den empfangenen Signalen feststellen und auf eine Relay-Attacke zurückschließen können. Je nach Lage des ID-Gebers zum Fahrzeug können sich die Signalstärken erheblich verändern. Dies ist z.B. der Fall, wenn sich der ID-Geber in einer ungünstigen Lage gegenüber einer der genutzten Sendeantennen befindet, so, dass es zu Übersteuerungen oder geringen Signalstärken kommt, oder auch wenn der ID-Geber in einem Punkt platziert ist, indem sich die Feldvektoren der gleichzeitig betriebenen Antennen aufheben.

Aus der US 2013/063247 A1 ist ein Verfahren zu Sicherung einer drahtlosen Datenkommunikation zwischen einem Fahrzeugschlüssel und einem Fahrzeug bekannt. Ein unbefugtes Ausdehnen des Kommunikationspfads oder der Kommunikationsverbindung über einen Relay-Transceiver kann auf zuverlässige Weise erkannt werden, indem mehrere Signale nacheinander gesendet werden und anschließend dieselben Signale gleichzeitig gesendet werden.

Die DE 10 2006 008140 A1 beschreibt ein Verfahren zum Betrieb eines funkbasierten Identifikationssystems mit einer Zentraleinheit und zumindest einem Identifikationsgeber. Die Zentraleinheit erzeugt ein elektrisches Feld vorgegebener Feldstärke mit einer ersten Identifikationsinformation, der Identifikationsgeber ermittelt die Feldstärke und sendet die Feldstärke oder eine daraus abgeleitete Größe als einen Teil einer zweiten Identifikationsinformation an die Zentraleinheit zurück. Die zweite Identifikationsinformation wird nur dann als korrekt eingestuft, wenn die von dem Identifikationsgeber erkannte und an die Zentraleinheit übermittelte Feldstärke in einem vorgegebenen Feldstärkebereich liegt.

Die Erfindung betrifft eine Fortbildung des Systems und Verfahrens aus der genannten WO 2015/084852 A1. Entsprechend wird bezüglich des grundlegenden Prinzips der Funktion einer Auswertung der Feldvektoren und orientierungsabhängigen Signalstärken auf dieses Dokument Bezug genommen.

Aufgabe der Erfindung ist es, Verfahren zur Erkennung von Relay-Angriffen verlässlicher und robuster zu gestalten.

Diese Aufgabe wird gelöst durch ein Verfahren mit den Merkmalen des Patentanspruches 1.

Die Erfindung nutzt die Anordnung von mehreren, ortsverschiedenen Sendeantennen am Fahrzeug. Diese Antennen senden niederfrequente Signale aus, die nur im nahen Umkreis des Fahrzeuges zu empfangen sind. Derartige niederfrequente (LF) Signale werden bei schlüssellosen Zugangssystemen verwendet, um einen ID-Geber beispielsweise aus einem Ruhemodus aufzuwecken.

Häufig sind fahrzeugseitige LF-Sendeantennen im Bereich der Türgriffe, beispielsweise der Seitentüren oder auch der im Innenraum des Fahrzeuges oder im Dachbereich sowie im Bereich der Frontscheibe platziert sein.

In dem Fahrzeug ist eine Steuereinrichtung angeordnet, welche die jeweiligen LF-Sendeantennen zum Aussenden von niederfrequenten Signalen ansteuern kann. Diese Ansteuerung kann zeitversetzt oder auch zeitgleich passieren, so dass die LF-Sendeantennen entsprechend ihre Signale mit einem gewissen Zeitabstand aussenden oder mehrere LF-Sendeantennen Signale gleichzeitig aussenden.

Ein ID-Geber ist gegenüber dem Fahrzeug mobil ausgebildet und weist eine 3D-Antennenanrodnung auf. Eine solche 3D-Antennenanordnung hat mehrere in verschiedene Raumrichtung orientierte Antennenspulen, die Signale empfangen können. Außerdem weist der ID-Geber eine Kommunikationseinrichtung auf, die zur Kommunikation mit dem fahrzeugseitigen Steuergerät des Fahrzeuges ausgebildet ist. Auch das fahrzeugseitige Steuergerät ist mit Sende-Empfangsmitteln gekoppelt, um eine solche Kommunikation abzuwickeln. Derartige Sende-Empfangsmittel sind regelmäßig zur Kommunikation im Hochfrequenzbereich (HF) ausgebildet und in gängigen schlüssellosen Zugangssystemen bekannt und verwendet.

In einem System gemäß dem Stand der Technik (siehe WO 2015/084852 A1) werden die fahrzeugseitigen LF-Sendeantennen an verschiedenen Raumpositionen angesteuert, um niederfrequente Signale auszusenden. Der ID-Geber empfängt mit seiner 3D-Antennenanordnung die jeweiligen Signale und kann in Richtung der Achsen der einzelnen Empfangsantennen eine Signalstärkenbestimmung durchführen. Gemäß der Erfindung ist es vorgesehen, dass der mobile ID-Geber in einer ersten Empfangsphase zeitversetzt Signale von jeweils einer der fahrzeugseitigen LF-Sendeantennen empfängt. Je nach Lage des ID-Gebers wird dieser unterschiedliche Signalstärken von den jeweiligen LF-Sendeantennen empfangen. Gemäß der Erfindung werden die Sendeantennen zunächst zeitversetzt angesteuert, also derart, dass jeweils zeitgleich nur eine Antenne im aktiven Sendebetrieb ist.

ausgebildet, dass die zunächst einzeln betriebenen Sendeantennen nachfolgend gleichzeitig betrieben werden. Während die 3D-Antennenanordnung im ID-Geber im Falle der einzelnen aktiven Antennen nur das Feld einer einzigen Antenne sieht, wird bei dem zeitgleichen Aussenden mehrerer Antennen ein überlagertes Feld empfangen.

Je nachdem, wie die Signalstärken der Antennenfelder sich am Ort des ID-Gebers überlagern, resultiert ein Feldvektor mit einer gewissen Orientierung im Raum.

Gemäß der Erfindung ist es vorgesehen, dass der ID-Geber die Signalstärken der empfangenen Signale in verschiedenen Raumrichtungen seiner 3D-Antennenanordnung auswertet und Informationen bezüglich der Signalstärken an das Fahrzeug zurückübermittelt. In Abhängigkeit von diesen Informationen der raumrichtungsabhängigen Signalstärken nimmt die fahrzeugseitige Steuereinrichtung eine Anpassung der Signalstärken der LF-Sendeantennen vor oder wählt andere LF-Sendeantennen aus. Nach dieser angepassten Auswahl werden wiederum Signale ausgesandt, um Daten zur Erkennung einer unerlaubten Verlängerung der Funkstrecke (Relay-Attacke) zu erkennen. Die dazu eingesetzten Verfahren entsprechen weitgehend denen aus dem genannten Stand der Technik (WO 2015/084852). Wiederum werden dann mehrere Antennen zeitversetzt und danach gleichzeitig (oder umgekehrt) betrieben und die Signalstärken in verschiedenen Raumrichtungen werden im ID-Geber ausgewertet. Danach wird eine Plausibilitätskontrolle durchgeführt, da die Lage der Antennen am Fahrzeug bekannt ist und aus dieser Raumlage die erwarteten Signalstärken und Signalstärkeänderungen abgeleitet werden können. Wird beispielsweise eine erste Antenne mit einer ersten Signalstärke betrieben und danach eine zweite Antenne mit einer zweiten Signalstärke, so werden die jeweiligen Signalstärken im ID-Geber empfangen und gespeichert. Danach werden diese beiden Antennen beispielsweise zeitgleich und mit denselben Signalstärken wie zuvor betrieben und der gemessene Raumvektor dieser gemessenen überlagerten Feldverteilung muss identisch sein mit der berechneten Richtung eines Raumvektors, generiert beispielsweise sämtliche Raumvektoren in dieselbe Richtung, so liegt höchst wahrscheinlich eine unerlaubte Verlängerung der Funkstrecke vor.

Wesentlicher Aspekt der Erfindung ist es also, eine fahrzeugseitige Anpassung der Signalstärken in Abhängigkeit von den raumrichtungsabhängigen Signalstärken, wie sie im ID-Geber empfangen wurden, vorzunehmen. Auf diese Weise werden Situationen beherrschbar, die gemäß dem Stand der Technik nur mit großer Unsicherheit auswertbar waren.

Dies betrifft beispielsweise Situationen, in denen sich ein Benutzer eines Fahrzeuges mit seinem ID-Geber derart zwischen zwei Antennen platziert, dass sich die Raumvektoren der Felder in einer Raumrichtung der 3D-Spulenanordnung aufheben. Durch die Rückmeldung von dem ID-Geber bezüglich der empfangenen Feldstärke kann die Signalstärke angepasst werden (beispielsweise durch Erhöhung der Sendeleistung in einer der LF-Sendeantennen und Erniedrigung der Sendeleistung in der anderen Antenne), so dass das Verfahren gemäß dem Stand der Technik zur Plausibilitätsprüfung durchgeführt werden kann.

Die Rückübermittlung der Informationen vom ID-Geber an die fahrzeugseitige Steuereinrichtung kann insbesondere über eine Hochfrequenzkommunikation vorgenommen werden. Außerdem kann vorgesehen sein, dass mehrere Durchläufe vorgesehen sind, für den Fall, dass auch bei einer angepassten Sendeleistungsvorgabe wiederum Probleme auftreten.

Gemäß der Erfindung kann die Plausibilitätskontrolle grundsätzlich sowohl im ID-Geber als auch im Fahrzeug selbst stattfinden. Beispielsweise kann dazu vorgesehen sein, dass der ID-Geber nach jedem Empfang unmittelbar eine Information bezüglich der empfangenen Signalstärken in verschiedenen Raumrichtungen zurücksendet. Eine Zuordnung zu der Sendeantenne nimmt dann die fahrzeugseitige Steuereinrichtung vor, da diese Kenntnis über die Ansteuerung der Sendeantennen hat.

Alternativ kann auch vorgesehen sein, dass der ID-Geber eine vorgegebene Zeitdauer abwartet und dann eine Folge von Signalstärken zu einer Folge von empfangenen Signalen entsprechenden Raumpositionen der Sendeantennen im Fahrzeug vorgenommen und ausgewertet.

In einer bevorzugten Ausführungsform der Erfindung enthalten die von den fahrzeugseitigen Sendeantennen gesendeten Signale eine eindeutige Kennung der jeweiligen sendenden Sendeantenne.

Eine solche Kennung kann dann im ID-Geber ausgewertet werden und der ID-Geber kann die empfangenen Signalstärken in Zuordnung zu den Antennen an das Fahrzeug zurücksenden. Alternativ kann im ID-Geber die Position der jeweiligen Sendeantennen gespeichert sein und es werden dann Plausibilitätskontrollen zu den empfangenen Signalen unmittelbar im ID-Geber durchgeführt.

In einer Ausführungsform der Erfindung empfängt der ID-Geber wenigstens eines der ersten zeitversetzten niederfrequenten Signale mit Hilfe der 3D-Antennenanordnung. Dann, wenn eine Übersteuerung bei wenigstens einer der Raumrichtungen der 3D-Antennenanordnungen erfasst wird, werden die entsprechenden Signalinformationen an die Steuereinrichtungen im Fahrzeug übermittelt. Diese Informationen können beispielsweise in einer empfangenen Signalstärke bestehen, wobei dann fahrzeugseitig eine Übersteuerung erkannt wird, wenn die Signalstärke oberhalb eines vorgegebenen Schwellwertes liegt. Alternativ kann vom ID-Geber auch die Information übermittelt werden, dass es zu einer Übersteuerung bei einer der Sendeantennen gekommen ist. Wesentlich ist, dass die fahrzeugseitige Steuereinrichtung in Abhängigkeit von den Informationen veranlasst wird, die Sendeleistung der zugehörigen fahrzeugseitigen Sendeantenne zu reduzieren.

Diese Maßnahme ist besonders vorteilhaft, wenn sich der ID-Geber in unmittelbarer Nähe einer Sendeantenne befindet, beispielsweise in der Hosentasche eines Benutzers im Bereich eines Seitengriffs einer Fahrzeugtür.

Die Verringerung der Sendestärke der zugehörigen Antenne stellt sicher, dass eine Winkelabhängigkeit bei der nachfolgenden Signalaussendung zur Plausibilitätsprüfung und zur Erkennung von unerlaubten Funkstreckenverlängerungen mit bestmöglicher Dynamik ausgeführt wird. Ansonsten könnte, bei Feldvektor im Rahmen der Messgenauigkeit ununterscheidbar von einem variierten Feldvektor sein. Die Erfindung trägt in dieser Ausführung dazu bei, jederzeit einen optimierten Dynamikbereich für die Plausibilitätskontrolle bereitzustellen.

In einer anderen Ausführungsform der Erfindung wird immer dann, wenn die Signalstärkeauswertung im ID-Geber eine Signalstärke in einer Raumrichtung unterhalb einer vorgegebenen Schwelle zeigt, die Informationen bezüglich der Signalstärken in der Steuereinrichtung dazu führen, dass die Sendeleistungen der zugehörigen fahrzeugseitigen Sendeantenne erhöht wird.

Auch in dieser Gestaltung wird die Dynamik der Signalerkennung für die Plausibilitätskontrolle verbessert, da die Signalvektoren in einem Bereich geführt werden, in denen sie möglichst vergleichbare Längen aufweisen.

In einer weiteren Abwandlung der Erfindung wird anhand der Informationen in der fahrzeugseitigen Steuereinrichtung erkannt, dass eine der Antennen im ID-Geber entweder gar nicht oder nur mit äußerst geringer Signalstärke empfangen werden kann. In diesem Fall wählt die fahrzeugseitige Steuereinrichtung eine andere der mehreren Antennen am Fahrzeug aus, um diese für das Verfahren einzusetzen. In jedem Fall ist es für das resultierende Verfahren erforderlich, dass mindestens zwei Antennen an zwei verschiedenen Raumpositionen verbleiben.

In einer weiteren Fortbildung der Erfindung betreffen die Informationen bezüglich der raumrichtungsabhängigen Signalstärken solche Signale, die bei der gleichzeitigen Aussendung mehrerer Antennen empfangen wurden. Wird bei einer solchen gleichzeitigen Aussendung mehrerer LF-Sendeantennen in eine Raumrichtung nur ein sehr schwaches oder sogar verschwindendes Signal im ID-Geber detektiert, so führen die Informationen in der fahrzeugseitigen Steuereinrichtung dazu, dass die Sendestärken der verwendeten Antennen relativ zueinander geändert werden. Beispielsweise kann eine der Sendestärken der LF-Sendeantennen erhöht oder eine der Sendestärken erniedrigt werden. Es kann jedoch auch eine der Sendestärken erhöht und außerdem eine andere erniedrigt werden. Geber genau zwischen zwei aktiven LF-Sendeantennen, so kann das resultierende Feld in einer Raumrichtung verschwinden. Diese Information wird gemäß der Erfindung an die fahrzeugseitige Steuereinrichtung zurückübermittelt und es erfolgt eine Anpassung der Signalstärken. Beispielsweise wird eine der Sendestärken der verwendeten LF-Sendeantennen um 20 % erhöht, während die Sendestärke der anderen Antenne um 20 % verringert wird. Wird dann das Verfahren wiederholt und senden diese Antennen zeitgleich, so kann der zuvor verschwundene Feldvektor derart aufgebaut werden, dass in jeder Raumrichtung eine Signalstärke detektierbar ist.

Wie zuvor beschrieben, betrifft das Verfahren eine Ergänzung von bekannten Verfahren zur Erkennung einer Funkstreckenverlängerung, die eine Veränderung von Feldvektoren eines elektromagnetischen Feldes profitieren. Dazu sind grundsätzlich beliebige Verfahren gemäß dem Stand der Technik anwendbar, welche eine Plausibilitätsprüfung durchführen, die eine Lage der Antennen am Fahrzeug berücksichtigt und diese auf Konsistenz mit den empfangenen Signalstärken hin überprüft. In einer Ausführungsform der Erfindung wird nach der vorstehend beschriebenen Anpassung der Signale die Plausibilitätsprüfung derart durchgeführt, dass mit den angepassten Signalstärken zwei Sendeantennen am Fahrzeug angesteuert werden, um gleichzeitig Signale auszusenden. Der ID-Geber empfängt diese überlagerten Signale und geniert daraus Feldstärkeinformationen in den Raumdimensionen und einen resultierenden Feldvektor. Anschließend werden die beiden Antennen mit zueinander veränderten Signalstärken angesteuert, was zu einer Drehung des Feldvektors der überlagerten Felder am Ort des ID-Gebers führt. Es kann dann im ID-Geber oder im Fahrzeug selbst überprüft werden, ob diese Feldvektordrehung einer Drehung entspricht, die konsistent zu den Sendestärken und räumlichen Lagen der Sendeantennen ist. Eine solche Überprüfung kann sowohl im ID-Geber als auch im Fahrzeug selbst durchgeführt werden.

Die Erfindung wird nun anhand der beiliegenden Figuren näher erläutert.
Funkstreckenverlängerung, also einen sogenannten Relay-Station-Angriff;
Figur 2 zeigt schematisch die Anordnung von mehreren LF-Sendeantennen am Fahrzeug und deren Lage gegenüber einem mobilen ID-Geber;
Figur 3 zeigt die relevanten Komponenten eines Systems zur Ausführung der Erfindung;
Figur 4 zeigt schematisch den zeitlichen Ablauf von Sendesignalen und zugehörigen Feldvektoren;
Figuren 5a und 5b zeigen beispielhaft die Anpassung von Sendesignalstärken gemäß einem Ausführungsbeispiel der Erfindung;
Figuren 6a und 6b zeigen beispielhaft die Änderung der Signalstärken gemäß einem zweiten Ausführungsbeispiel der Erfindung;
Figur 7 zeigt ein Ablaufschema einer weiteren Ausführungsform der Erfindung.

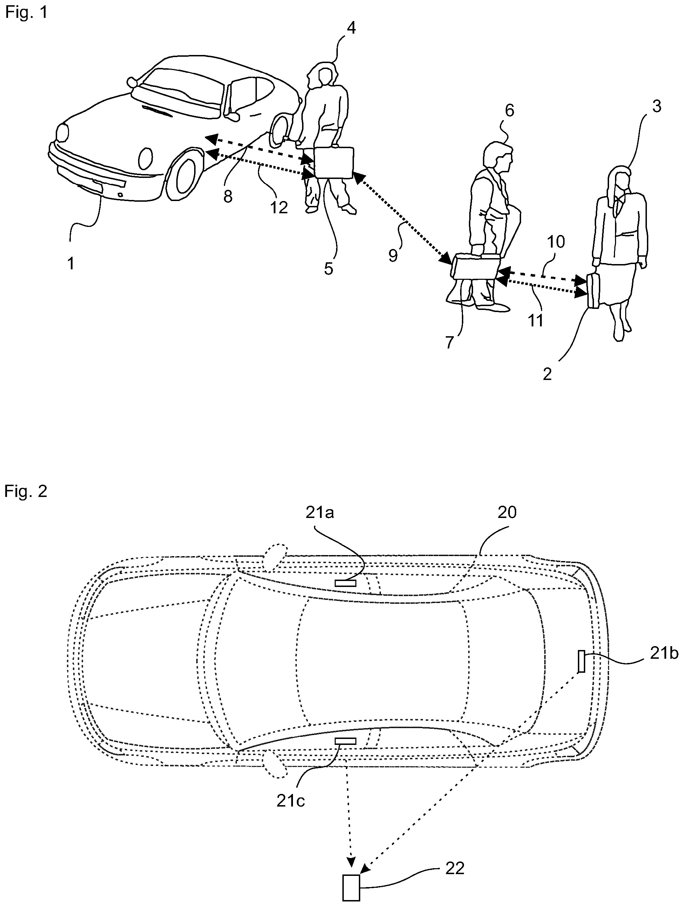

In Figur 1 ist der grundsätzliche Ablauf eines Relay-Angriffs (Funkstreckenverlängerung) zwischen einem Fahrzeug 1 und einem autorisierten ID-Geber 2 gezeigt. Die Person 3 führt den autorisierten ID-Geber 2 zu dem Fahrzeug 1 mit sich. Die Person 3 befindet sich jedoch mit dem ID-Geber 2 außerhalb der Reichweite von niederfrequenten Signalen, die das Fahrzeug 1 mit zugehörigen LF-Sendeantennen zum Start einer Kommunikation mit dem ID-Geber aussenden kann. In diesem Zusammenhang soll der Begriff "niederfrequente Signale" Frequenzen im Bereich von 3 - 300 KHz abdecken. Der Begriff "hochfrequente Signale" bezieht sich auf Frequenzen im Bereich von 300 MHz - 3 GHz. In diesem Beispiel werden Niederfrequenzsignale um 125 KHz verwendet, während die Hochfrequenzsignale im Bereich von 300 MHz liegen.

Eine Person 4 befindet sich mit einer Einrichtung 5 zur Funkstreckenverlängerung in der Nähe des Kraftfahrzeuges 1. Eine weitere Person 6 befindet sich mit einer weiteren Station 7 zur Funkstreckenverlängerung in der Nähe der Person 3 mit dem ID-Geber 2. Das Fahrzeug 1 sendet niederfrequente Signale 8 aus, die Informationen aus den niederfrequenten Signalen 8 in einer hochfrequenten Kommunikation 9 zu der weitern Verlängerungsstation 7. Diese sendet wiederum die niederfrequenten Signale in einer Nachricht 10 aus. Die Signale 10 werden von dem ID-Geber 2 empfangen und dort fälschlicherweise als Signale eines in der Nähe befindlichen Fahrzeuges interpretiert. Der ID-Geber 2 antwortet mit einer hochfrequenten Nachricht 11, welche Authentifizierungsinformationen enthält. Diese werden über die hochfrequenten Verbindung 9 wiederum von der Station 7 zu der Station 5 übermittelt und von dort in einer Signalantwort 12 an das Fahrzeug gesendet. Das Fahrzeug 1 geht davon aus, dass sich ein in der Nähe befindlicher ID-Geber beim Fahrzeug mit den Informationen gemeldet hat, überprüft die Authentifizierungsinformationen und entriegelt das Fahrzeug.

In diesem Verfahren ist es nicht möglich, eine solche Funkstreckenverlängerung ohne weiteres zu erkennen.

Die oben bereits zitierte WO 2015/084852 A1 beschreibt ein Verfahren, welches die Erkennung von Funkstreckenverlängerungen ermöglicht. Dabei werden ortsverschiedene Antennen an dem Fahrzeug nacheinander und/oder gemeinsam betrieben und die resultierenden Feldvektoren am Ort des ID-Gebers ausgewertet.

Figur 2 zeigt zur Verdeutlichung der Anordnung von Antennen am Fahrzeug 20 mit 3 Antennen 21a, 21b und 21c. Ein ID-Geber 22 für ein Keyless-Entry-System des Fahrzeuges befindet sich in der Nähe des Fahrzeuges. Die Sendeantennen 21a, 21b und 21c sind Sendeantennen für niederfrequente Signale. In der Darstellung aus Figur 2 ist ersichtlich, dass die Antenne 21b eine andere Raumorientierung zu dem ID-Geber 22 einnimmt als die Antenne 21c. Entsprechend werden Signale von diesen Antennen mit unterschiedlichen Feldvektoren in dem ID-Geber 22 empfangen. Außerdem werden die empfangenen Signalstärken stark von dem Abstand und der Abschirmung jeder der Antennen gegenüber dem ID-Geber abhängen.

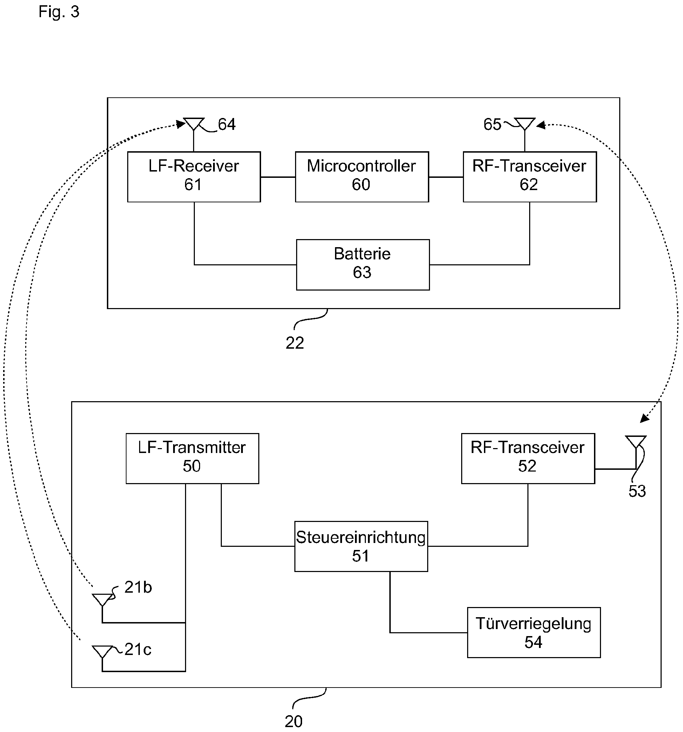

Figur 3 verdeutlicht in abstrahierter Weise die erfindungsrelevanten Komponenten des Fahrzeuges 20 und des IDangeordnet, der mit der zentralen Steuereinrichtung 51 gekoppelt ist. Mit dem LF-Transmitter 50 sind zwei Antennen 21b und 21c gekoppelt, welche in diesem Beispiel die Lage aus Figur 2 am Fahrzeug 20 einnehmen. Weiterhin weist das Fahrzeug einen Hochfrequenz-Sendeempfänger oder auch Hochfrequenz-Transceiver 52 auf, der mit einer Antennen 53 gekoppelt ist. Die Steuereinrichtung 51 ist mit dem Hochfrequenz-Transceiver 52 gekoppelt, um diesen zur Kommunikation mit dem ID-Geber 22 anzusteuern. Außerdem ist mit der Steuereinrichtung eine Türverriegelung 54 gekoppelt, um nach erfolgreicher Authentifizierung eines ID-Gebers die Türverriegelung aufheben zu können.

Der ID-Geber 22 weist einen Mikrokontroller 60 auf sowie einen Niederfrequenz-Receiver 61. Weiterhin ist ein Hochfrequenz-Transceiver 62 vorgesehen. Eine Batterie 63 ist zur Versorgung sämtlicher Komponenten mit diesen gekoppelt. Der Niederfrequenz-Receiver 61 und der Hochfrequenz-Transceiver 62 sind mit dem Mikrokontroller 60 gekoppelt. Der Mikrokontroller 60 kann de empfangenen Signale von dem LF-Receiver 61 auswerten und den Hochfrequenz-Transceiver 62 zur Kommunikation mit dem Fahrzeug ansteuern. Dazu sind jeweils Antennen mit dem Hochfrequenz-Transceiver 62 und dem Niederfrequenz-Receiver 61 gekoppelt. Eine Antenne 64 empfängt die niederfrequenten Signale der Antennen 21b und 21c. Eine Antenne 65 dient als Sende- und Empfangsantenne zur Kommunikation mit dem fahrzeugseitigen Hochfrequenz-Transceiver 52 und der dem Hochfrequenz-Transceiver zugeordneten Antenne 53.

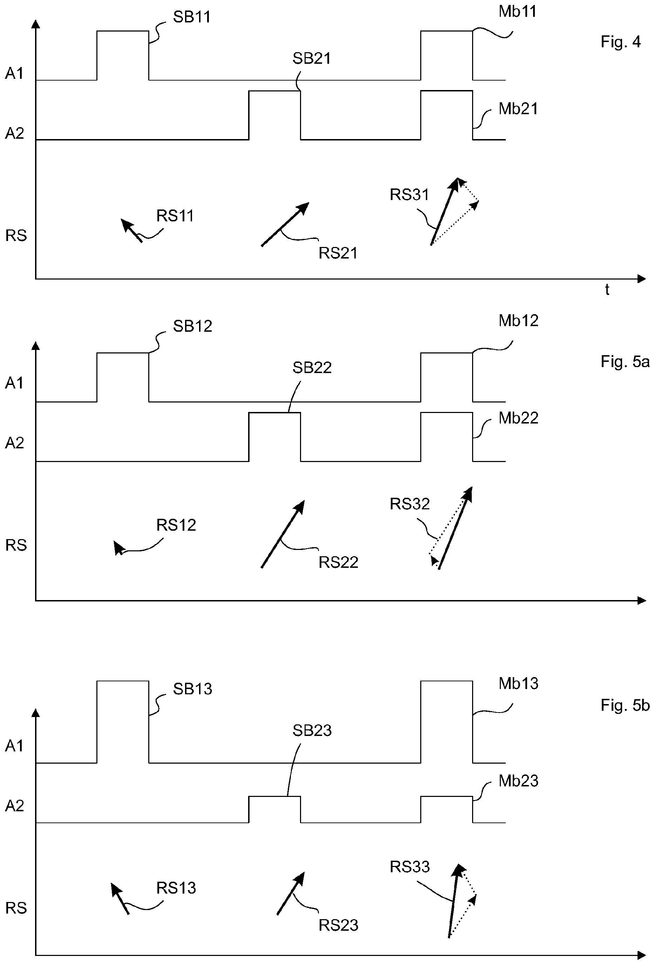

Figur 4 zeigt schematisch die Überprüfung der Plausibilität von empfangenen Signalen im ID-Geber. Entlang einer Zeitachse sind die Ansteuerungspegel von einer ersten fahrzeugseitigen LF-Sendeantenne A1 und einer zweiten fahrzeugseitigen LF-Sendeantenne A2 dargestellt. Mit dem Bezugszeichen SB1 ist ein Single-Burst der Antennen A1 bezeichnet. Als "Single-Burst" ist dabei eine Signalaussendung vorgegebener Dauer einer Einzelantenne zu verstehen. Mit den Bezugszeichen SB2 ist ein Single-Burst der Antenne A2 bezeichnet.

Anteile eines synchronen Multi-Bursts der Antennen A1 und A2, also zeitgleicher Aussendungen mehrerer Antennen. Die Antennen A1 und A2 werden also zunächst zeitversetzt betrieben. Erst nachdem der Single-Burst der Antenne A1 abgeschlossen ist, wird, in diesem Beispiel mit Zeitabstand, ein Single-Burst der Antenne A2 veranlasst. Die Ansteuerung dieser LF-Sendeantennen übernimmt die fahrzeugseitige Steuereinrichtung.

Anschließend werden beide Antennen zum synchronen Aussenden eines sogenannten Multis-Bursts angesteuert. Die untere Zeile des Diagramms 4 zeigt in schematischer Weise die empfangenen Feldvektoren am Ort des ID-Gebers. Der ID-Geber weist eine 3D-Antennenanordnung auf, welche entlang von drei Raumachsen niederfrequente Signale empfängt. Zu jeder der drei Raumachsen und damit zu jeder der Antennenspulen wird eine zugehörige Signalstärke ermittelt. Mit diesen Signalstärken in den drei Raumachsen ergibt sich ein dreidimensionaler Vektor einer Feldstärkenverteilung oder Signalstärkenverteilung.

In den Beispielen dieser Erfindung sind die dreidimensionalen Vektoren zweidimensional dargestellt, die Ergänzung einer weiteren Raumrichtung ist jedoch ohne weiteres ersichtlich. In Figur 4 ist gezeigt, dass sowohl die Antennen A1 als auch die Antenne A2 zum Aussenden gleicher Signalstärken angesteuert werden. Dies gilt in diesem Beispiel sowohl für die Single-Bursts als auch für den synchronen Multi-Burst. Die beim ID-Geber empfangenen Signalstärken sind hingegen keineswegs gleich. Dies liegt an der Entfernung und Orientierung des ID-Gebers gegenüber den ortverschiedenen Antennen am Fahrzeug. Die Empfangenen Signale (received signals) sind in der Zeile RS dargestellt. Bei der Aussendung des Single-Burst SB11 empfängt die 3D-Spulenanordnung eine Signalstärkenverteilung entlang der Raumachsen, welche dem Vektor RS11 entspricht. Der Vektor RS21 entspricht der Signalstärke bei dem Single-Burst SB21. Aus diesen Signalstärken kann grundsätzlich durch Addition ein resultierender Vektor berechnet werden. Während des anschließenden Multi-Burst wird ein Signalstärkevektor RS31 gemessen. Dieser tatsächlich gemessene Signalstärkevektor RS31 verglichen. Wird eine Übereinstimmung innerhalb vorgegebener Toleranzgrenzen festgestellt, wird das Authentifizierungsverfahren mit dem Fahrzeug fortgesetzt. Wird keine Übereinstimmung festgestellt, wird das Vorliegen einer unerlaubten Funkstreckenverlängerung geschlossen.

Die Figur 4 zeigt ein Beispiel einer solchen Plausibilitätsprüfung, andere Möglichkeiten der Plausibilitätsprüfung anhand der Raumausrichtung der empfangenen Signalstärken sind ebenfalls möglich und werden beispielsweise in dem zuvor genannten Dokument WO 2015/084852 beschrieben.

Bei diesem Verfahren können jedoch die Probleme auftreten, die beispielsweise in Figur 5a gezeigt sind. Die Signalstärkenabfolge aus Figur 5a entspricht derjenigen aus Figur 4. In diesem Fall ist jedoch der ID-Geber an einem anderen Ort und mit einer anderen Schirmung positioniert. Von der Signalstärke des ersten einfachen Bursts SBS12 wird beim ID-Geber nur ein kleiner Signalstärke-Vektor RS12 detektiert. Von dem Signal Burst RS22 wird hingegen ein deutlich größerer Signalstärke-Vektor RS22 detektiert. Die Addition dieser Vektoren RS12 und RS22 führt aufgrund der deutlich unterschiedlichen empfangenen Signalstärken zu einem Vektor, der innerhalb der Messwerttoleranzen nahezu gleich dem Stärkeren der Vektoren, nämlich RS22 ist. Wird also während des Multi-Bursts MB12 und MB22 der Signalstärke-Vektor RS32 detektiert, so ist aufgrund der geringen Signalstärke RS12 innerhalb der Messtoleranzen keine verlässliche Prüfung einer Abweichung der Signalstärke-Vektoren möglich.

Erfindungsgemäß wird daher vorgesehen, dass in dem Falle, dass ein Signal, welches im ID-Geber empfangen wird, die Feldstärkemessung übersteuert oder die Feldstärkemessung unterhalb eines vorgegebenen Mindestwertes liegen lässt, eine Anpassung der Feldstärken auf Fahrzeugseite erfolgt. Dies wird realisiert, indem der ID-Geber Informationen zu der Feldstärkemessung an das Fahrzeug übermittelt und die Steuereinrichtung in Abhängigkeit von diesen Informationen die Sendestärken der Antennen anpasst, um eine verlässliche ermöglichen.

In dem Beispiel von Figur 5a wird der ID-Geber nach Empfang sämtlicher Signale oder bereits nach dem Empfang des Burst SB12 Informationen über eine hochfrequente Funkkommunikation an die fahrzeugseitige Steuereinrichtung senden. Die fahrzeugseitige Steuereinrichtung überprüft die Informationen und passt die Sendestärken der Antenne A1 und A2 an, wie in Figur 5b gezeigt. Die Antenne A1 wird also mit erhöhter Sendestärke betrieben, während die Antenne A2 mit verringerter Signalstärke betrieben wird. Dies ist an den Single-Burst SB13 und SB23 erkennbar sowie den zugehörigen Komponenten des Multi-Burst MB13 und MB23. Nun resultieren aus den empfangenen Signalpegeln der 3D-Spulenanrodnung im ID-Geber die Signalstärke-Vektoren RS13 und RS23 sowie während des Multi-Burst ein Feldstärkevektor RS33, die eine verlässliche Auswertung innerhalb der Messtoleranzen ermöglichen.

Die Erfindung führt also dazu, dass durch Rückmeldung der Signalstärken vom ID-Geber an das Fahrzeug und durch dortige Anpassung der Sendesignalstärken eine optimierte Auswertung der Raumvektoren vorgenommen werden kann. Dies gilt grundsätzlich für sämtliche Verfahren, in denen die Raumorientierung der Vektoren zur Überprüfung auf eine Relay-Attacke verwendet wird.

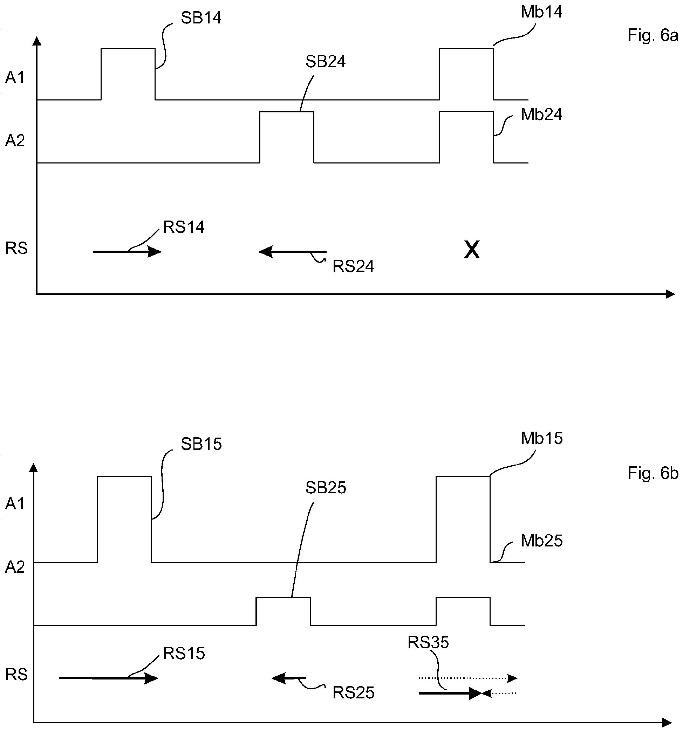

Die Figuren 6a und 6b zeigen eine weitere Einsatzsituation der Erfindung. Wiederum werden die Antennen A1 und A2 zunächst im Single-Burst-Betrieb und anschließend im Multi-Burst-Betrieb angesteuert. In diesem Falle resultieren bei dem Single-Burst SB14 und SB24 die Signalstärke-Vektoren RS14 und RS15, welche sich jedoch aufheben. In diesem Fall ist keine verlässliche Auswertung einer Vektorensumme möglich, beispielsweise, weil sich der Benutzer mit seinem Fahrzeug an einer ungünstigen Stelle zwischen zwei Sendeantennen befindet.

Durch die Rückmeldung der empfangenen Feldstärken vom ID-Geber an das Fahrzeug wird ermöglicht, dass die Sendestärke der Antenne A1 erhöht wird, während gleichzeitig die Sendestärke der Antenne A2 verringert wird. Es resultieren die Single-Bursts SB15 und SB25 in Figur 6b und die zugehörigen empfangenen nicht länger auf, so dass ein Plausibilitätsvergleich mit einem während des Multi-Bursts MB15, MB25 empfangenes Signal RS35 mit der berechneten Summe aus den Signalen RS15 und RS25 durchgeführt werden kann.

Eine solche Nutzbarkeit der Feldauswertung im Bereich der Nullstellen wird nur durch die Rückmeldung vom ID-Geber an das Fahrzeug möglich.

Zu welchem Zeitpunkt diese Rückmeldung stattfindet, ist beliebig. Es können grundsätzlich auch mehrere Rückmeldungen, beispielsweise nach jedem Single-Burst und/oder jedem Multi-Burst stattfinden. Die Kommunikation bezüglich dieser Signalstärken zwischen ID-Geber und Fahrzeug findet über eine Hochfrequenzkommunikation statt.

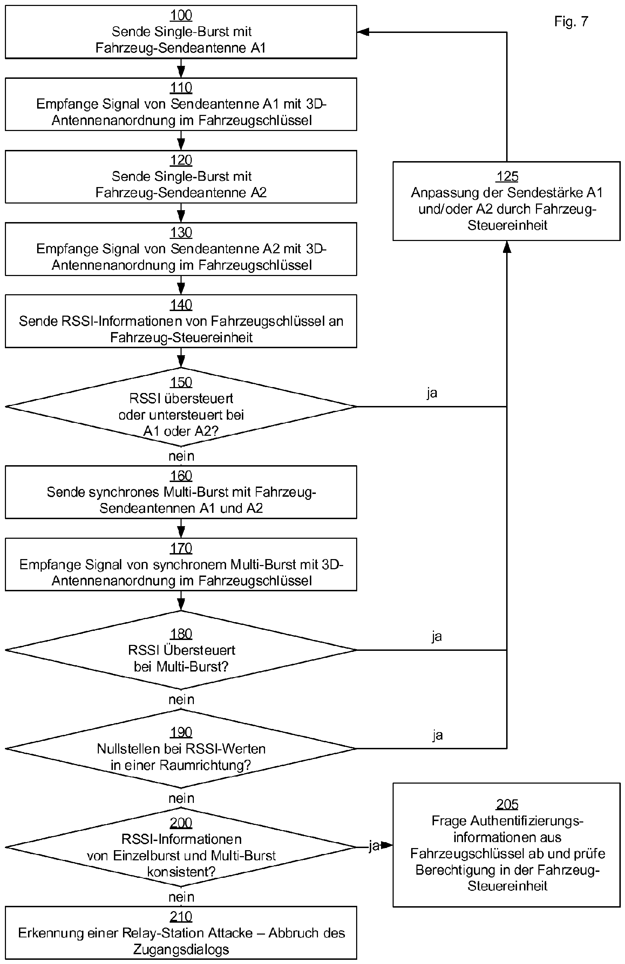

Die Figur 7 zeigt beispielhaft einen Verfahrensablauf einer weiteren Ausführungsform der Erfindung. Bei Schritt 100 sendet die Steuereinrichtung mit einer ersten Fahrzeug-Sendeantenne A1 ein niederfrequentes Burst-Signal. Bei Schritt 110 wird das niederfrequente Burst-Signal der Sendeantenne A1 mit der 3D-Antennenanordnung im ID-Geber empfangen. Anschließend wird bei Schritt 120 ein Burst-Signal mit der weiteren, ortsversetzen Fahrzeug-Sendeantenne A2 gesendet und bei Schritt 130 im ID-Geber empfangen. Nach Erhalt der beiden Burst-Signale sendet der ID-Geber die RSSI-Informationen bezüglich der Raumachsen, also Informationen über den Signalstärkevektor am Ort des ID-Gebers an die Fahrzeugsteuereinheit über eine hochfrequente Kommunikationsverbindung.

Wird fahrzeugseitig bei Schritt 150 festgestellt, dass ein Signalstärkevektor, so wie vom ID-Geber übermittelt, eine Übersteuerung oder Untersteuerung einer der Antennen der 3D-Antennenanordnung anzeigt, so wird zu Schritt 125 verzweigt, um eine Anpassung der Sendestärken der Antennen A1 und/oder A2 durchzuführen. Beim ID-Geber zu schwach empfangene Signale führen zu einer Erhöhung der Sendestärke der zugeordneten Antenne. Bei Übersteuerung von empfangenen Signalen am Ort des ID-Gebers wird die zugehörige Antenne in ihrer Sendestärke reduziert. Es kann an dieser Stelle auch vorgesehen sein, dass Antenne als die Antennen A1 und A2 zugeschaltet werden, um das Verfahren mit räumlich günstiger gelegenen LF-Sendeantennen am Fahrzeug durchzuführen.

Liegt weder eine Übersteuerung noch eine Untersteuerung vor, steuert die Fahrzeugsteuereinrichtung bei 160 die Antennen A1 und A2 zum synchronen Aussenden eines Multi-Bursts an. Die zugehörigen Signale werden bei Schritt 170 von der 3D-Antennenanordnung im ID-Geber empfangen. Bei Schritt 180 wird überprüft, ob während des Multi-Bursts eine Übersteuerung der empfangenen Signalstärken vorliegt. Ist dies der Fall, wird wiederum zu Schritt 125 verzweigt und das Verfahren mit angepassten Signalstärken neu gestartet. Liegt keine Übersteuerung oder Untersteuerung vor, wird geprüft, ob Nullstellen vorliegen, also ob sich die Signalstärken am Ort des ID-Gebers aufheben. Wird dies festgestellt, wird ebenfalls bei Schritt 125 eine Anpassung der Signalstärken vorgenommen (z.B. durch Erhöhung der Sendestärken einer der beteiligten LF-Sendeantennen und Verringerung der Sendestärke einer anderen der LF-Sendeantennen).

Bei Schritt 200 wurde das Verfahren durchgeführt, wobei sich sämtliche empfangenen Signalstärken in zulässigen Dynamikbereichen befunden haben. Dort kann die Auswertung hinsichtlich der Konsistenz der Signalstärken gemäß obigem Beispiel durchgeführt werden. Es können insbesondere an dieser Stelle die Summe der empfangenen Signalstärke-Vektoren der Single-Bursts mit dem empfangenen Signalstärke-Vektor des Multi-Bursts verglichen werden. Sind dies Signale plausibel, so kann bei 205 der Authentifizierungsdialog zwischen ID-Geber und Fahrzeug durchgeführt werden, da gemäß dieser Auswertung keine Relay-Attacke vorliegt. Sind diese Informationen nicht plausibel, wird eine Relay-Attacke erkannt und der Authentifizierungsdialog wird bei Schritt 210 abgebrochen.

## Patentansprüche

1. Verfahren zum Betrieb eines passiven Zugangssystems für Kraftfahrzeuge,
wobei an einem Fahrzeug mehrere fahrzeugseitige Sendeantennen zum Aussenden von niederfrequenten Signalen an verschiedenen Raumpositionen angeordnet sind, welche mit wenigstens einer Steuereinrichtung gekoppelt sind, wobei die Steuereinrichtung mit fahrzeugseitigen Sende-Empfangsmitteln für eine drahtlose Kommunikation gekoppelt ist,
wobei ein gegenüber dem Fahrzeug mobiler ID-Geber mit einer 3D-Empfangsantennenanordnung zum Empfang von niederfrequenten Signalen ausgebildet ist, wobei der ID-Geber über schlüsselseitige Sende-Empfangsmitteln für eine drahtlose Kommunikation verfügt,
wobei mit Hilfe der Steuereinrichtung eine erste fahrzeugseitige Sendeantenne und eine zweite fahrzeugseitige Sendeantenne zum zeitversetzten Aussenden von ersten zeitversetzten niederfrequenten Signalen mit jeweils zugeordneten Sende-Signalstärken angesteuert werden,
wobei mit Hilfe der Steuereinrichtung die erste und die zweite fahrzeugseitige Sendeantenne zum gleichzeitigen Aussenden von ersten gleichzeitigen niederfrequenten Signalen mit jeweils zugeordneten Sende-Signalstärken angesteuert werden,
wobei in dem mobilen ID-Geber wenigstens eines der zeitversetzten oder zeitgleichen niederfrequenten Signale mit Hilfe der 3D-Antennanordnung empfangen wird und für jede der Raumrichtungen eine Signalstärkenauswertung durchgeführt wird, so dass für jede Raumrichtung der 3D-Empfangsantennenanordnung raumrichtungsabhängige Signalstärkeinformationen ermittelt werden,
wobei Informationen bezüglich der raumrichtungsabhängigen Signalstärken von dem ID-Geber drahtlos von den schlüsselseitigen Sende-Empfangsmitteln an fahrzeugseitigen Sende-Empfangsmittel der Steuereinrichtung übertragen werden,
wobei die Steuereinrichtung die Informationen bezüglich der raumrichtungsabhängigen Signalstärken empfängt und in Abhängigkeit von den empfangenen Informationen eine oder mehrere fahrzeugseitige Sendeantennen zum zeitversetzten oder gleichzeitigen Aussenden von weiteren niederfrequenten Signalen ansteuert, wobei die jeweiligen zugeordneten Sende-Signalstärken in Abhängigkeit von den empfangenen Informationen bezüglich der raumrichtungsabhängigen Signalstärken gewählt werden,
wobei in dem mobilen ID-Geber die weiteren niederfrequenten Signale mit Hilfe der 3D-Antennanordnung empfangen werden und für jede der Raumrichtungen eine Signalstärkenauswertung durchgeführt wird, so dass für jede Raumrichtung der 3D-Antennenanordnung weitere raumrichtungsabhängige Signalstärkeinformationen ermittelt werden,
wobei in Abhängigkeit von den weiteren raumrichtungsabhängigen Signalstärkeinformationen eine Plausibilitätsprüfung durchgeführt wird, bei der geprüft wird ob die raumrichtungsabhängigen Signalstärkeinformationen konsistent sind, um eine Verlängerung der Signalstrecke zwischen dem Fahrzeug und dem ID-Geber über Zwischenstationen zu erkennen,
**dadurch gekennzeichnet, dass**
in dem mobilen ID-Geber wenigstens eines der ersten zeitversetzten niederfrequenten Signale mit Hilfe der 3D-Antennanordnung empfangen wird und wobei dann, wenn die Signalstärkenauswertung eine Signalstärke unterhalb einer vorgegebenen Schwelle bei wenigstens einer der Raumrichtungen der 3D-Antennenanordnung anzeigt, die Informationen bezüglich der raumrichtungsabhängigen Signalstärken in der Steuereinrichtung veranlassen, dass eine andere fahrzeugseitige Sendeantenne statt der dem Signal zugehörigen fahrzeugseitigen Sendeantenne zum Senden eines weiteren Signals angesteuert wird.

2. Verfahren nach Anspruch 1, wobei in den von den fahrzeugseitigen Sendeantennen gesendeten Signalen eine eindeutige Kennung der jeweiligen sendenden Sendeantenne codiert ist.

3. Verfahren nach Anspruch 1 oder 2, wobei in dem mobilen ID-Geber wenigstens eines der ersten zeitversetzten niederfrequenten Signale mit Hilfe der 3D-Antennanordnung empfangen wird und wobei dann, wenn die Signalstärkenauswertung eine Übersteuerung bei wenigstens einer der Raumrichtungen der 3D-Antennenanordnung anzeigt, die Informationen bezüglich der raumrichtungsabhängigen Signalstärken in der Steuereinrichtung veranlassen, dass die Sendeleistung der zugehörigen fahrzeugseitigen Sendeantenne reduziert wird.

4. Verfahren nach einem der vorangehenden Ansprüche, wobei in dem mobilen ID-Geber wenigstens eines der ersten zeitversetzten niederfrequenten Signale mit Hilfe der 3D-Antennanordnung empfangen wird und wobei dann, wenn die Signalstärkenauswertung eine Signalstärke unterhalb einer vorgegebenen Schwelle bei wenigstens einer der Raumrichtungen der 3D-Antennenanordnung anzeigt, die Informationen bezüglich der raumrichtungsabhängigen Signalstärken in der Steuereinrichtung veranlassen, dass die Sendeleistung der zugehörigen fahrzeugseitigen Sendeantenne erhöht wird.

5. Verfahren nach einem der vorangehenden Ansprüche, wobei in dem mobilen ID-Geber ausschließlich eines der ersten zeitversetzten niederfrequenten Signale mit Hilfe der 3D-Antennanordnung empfangen wird und wobei die Informationen bezüglich der raumrichtungsabhängigen Signalstärken in der Steuereinrichtung veranlassen, dass statt der fahrzeugseitigen Sendeantenne, welche das nicht im ID-Geber empfangene Signal gesendet hat, eine andere fahrzeugseitige Sendeantenne zum Senden eines weiteren Signals angesteuert wird.

6. Verfahren nach einem der vorangehenden Ansprüche, wobei in dem mobilen ID-Geber wenigstens eines der ersten gleichzeitigen niederfrequenten Signale mit Hilfe der 3D-Antennanordnung empfangen wird und wobei dann, wenn die Signalstärkenauswertung eine Signalstärke unterhalb einer vorgegebenen Schwelle bei wenigstens einer der Raumrichtungen der 3D-Antennenanordnung anzeigt, die Informationen bezüglich der raumrichtungsabhängigen Signalstärken in der Steuereinrichtung veranlassen, dass die Sendeleistung wenigstens einer der zugehörigen fahrzeugseitigen Sendeantenne erhöht oder verringert wird.

7. Verfahren nach Anspruch 6, wobei dann, wenn die Signalstärkenauswertung eine Signalstärke unterhalb einer vorgegebenen Schwelle bei wenigstens einer der Raumrichtungen der 3D-Antennenanordnung anzeigt, die Informationen bezüglich der raumrichtungsabhängigen Signalstärken in der Steuereinrichtung veranlassen, dass die Sendeleistung wenigstens einer der zugehörigen fahrzeugseitigen Sendeantenne erhöht und die Sendeleistung einer anderen der zugehörigen fahrzeugseitigen Sendeantennen verringert wird.

8. Verfahren nach einem der Ansprüche 1 bis 5, wobei in dem mobilen ID-Geber wenigstens eines der ersten gleichzeitigen niederfrequenten Signale mit Hilfe der 3D-Antennanordnung empfangen wird und wobei dann, wenn die Signalstärkenauswertung eine Signalstärke unterhalb einer vorgegebenen Schwelle bei wenigstens einer der Raumrichtungen der 3D-Antennenanordnung anzeigt, die Informationen bezüglich der raumrichtungsabhängigen Signalstärken in der Steuereinrichtung veranlassen, dass statt einer der zugehörigen fahrzeugseitigen Sendeantennen eine andere fahrzeugseitige Sendeantenne zum Senden eines weiteren Signals angesteuert wird.

9. Verfahren nach einem der vorangehenden Ansprüche, wobei fahrzeugseitige Sendeantennen zum Aussenden von den weiteren niederfrequenten Signalen derart angesteuert werden, dass wenigstens zwei fahrzeugseitige Sendeantennen gleichzeitig angesteuert werden, wobei zeitabhängig die Sendeantennen derart mit zueinander veränderten Signalstärken angesteuert werden, dass im ID-Geber überlagert empfangene Signalen zeitabhängig unterschiedliche Feldvektoren aufweisen, wobei in Abhängigkeit von einer zeitabhängigen Veränderung der Feldvektoren die Plausibilitätsprüfung durchgeführt wird.

## Claims

1. Method for operating a passive access system for motor vehicles,
with a plurality of vehicle-side transmit antennas for transmitting low-frequency signals arranged at different spatial positions on a vehicle, which are coupled to at least one control device, the control device being coupled to vehicle-side transceiver means for wireless communication,
wherein an ID-transmitter which is mobile relative to the vehicle is designed with a 3D-receiving antenna arrangement for receiving low-frequency signals, wherein the ID-transmitter has key-side transceiver means for wireless communication,
wherein a first transmission antenna on the vehicle side and a second transmission antenna on the vehicle side are controlled with the aid of the control device for the time-shifted transmission of first time-shifted low-frequency signals with respectively assigned transmission signal strengths,
wherein the first and the second transmission antenna on the vehicle side being controlled with the aid of the control device for the simultaneous transmission of first simultaneous low-frequency signals with respectively assigned transmission signal strengths,
wherein at least one of the time-shifted or simultaneous low-frequency signals is received in the mobile ID-transmitter with the aid of the 3D-antenna arrangement and a signal strength evaluation is carried out for each of the spatial directions, so that signal strength information dependent on the spatial direction is determined for each spatial direction of the 3D receiving antenna arrangement,
wherein information relating to the signal strengths dependent on the spatial direction is transmitted from the ID-transmitter wirelessly from the key-side transceiver means to vehicle-side transceiver means of the control device,
wherein the control device receives the information relating to the signal strengths dependent on the direction of space and, depending on the received information, controls one or more transmission antennas on the vehicle side for the time-shifted or simultaneous transmission of further low-frequency signals, the respective associated transmission signal strengths being selected depending on the received information relating to the signal strengths dependent on the direction in space,
whereby in the mobile ID transmitter the further low-frequency signals are received with the aid of the 3D-antenna array and a signal strength evaluation is carried out for each of the spatial directions, so that further spatial direction-dependent signal strength information is determined for each spatial direction of the 3D-Antenna array,
whereby a plausibility check is carried out depending on the further space-direction dependent signal strength information, checking whether the space-direction dependent signal strength information is consistent in order to detect an relay of the signal between the vehicle and the ID transponder via intermediate stations,
**characterized in that**
in the mobile ID transponder at least one of the first time-shifted low-frequency signals with the help of the
3D-Antenna arrangement is received and wherein, if the signal strength evaluation indicates a signal strength below a predetermined threshold in at least one of the spatial directions of the 3D-Antenna arrangement, the information relating to the spatial direction-dependent signal strengths in the control device causes another transmission antenna on the vehicle side to be driven instead of the transmission antenna on the vehicle side associated with the signal in order to transmit a further signal.

2. Method according to claim 1, wherein a unique identification of the respective transmitting antenna is coded in the signals transmitted by the vehicle-side transmitting antennas.

3. Method according to claim 1 or 2, wherein in the mobile ID transmitter at least one of the first time-shifted low-frequency signals is received with the aid of the 3D-antenna arrangement and wherein, if the signal strength evaluation indicates an overload in at least one of the spatial directions of the 3D-antenna arrangement, the information relating to the spatial direction-dependent signal strengths in the control device causes the transmission power of the associated transmitting antenna on the vehicle to be reduced.

4. Method according to one of the preceding claims,
wherein in the mobile ID transponder at least one of the first time-delayed low-frequency signals is transmitted by means of the
3D-Antenna arrangement is received and wherein, if the signal strength evaluation indicates a signal strength below a predetermined threshold in at least one of the spatial directions of the 3D-Antenna arrangement, the information regarding the spatial direction-dependent signal strengths in the control device causes the transmission power of the associated transmission antenna on the vehicle side to be increased.

5. Method according to one of the preceding claims, whereby in the mobile ID transponder exclusively one of the first time-shifted low-frequency signals is received and wherein the information regarding the signal strengths dependent on the spatial direction in the control device causes another transmitting antenna on the vehicle side to be controlled for transmitting a further signal instead of the transmitting antenna on the vehicle side which has transmitted the signal not received in the ID transponder.

6. Method according to one of the preceding claims,
wherein in the mobile ID transponder at least one of the first simultaneous low-frequency signals is transmitted with the aid of the 3D-Antenna arrangement is received and wherein, if the signal strength evaluation indicates a signal strength below a predetermined threshold in at least one of the spatial directions of the 3D-Antenna arrangement, the information relating to the spatial direction-dependent signal strengths in the control device causes the transmission power of at least one of the associated vehicle-side transmission antennas to be increased or reduced.

7. Method according to claim 6, wherein if the signal strength evaluation indicates a signal strength below a predetermined threshold in at least one of the spatial directions of the 3D-Antenna array, the information regarding the spatial direction-dependent signal strengths in the control device causes the transmission power of at least one of the associated vehicle-side transmission antennas to be increased and the transmission power of another of the associated vehicle-side transmission antennas to be reduced.

8. Method according to one of claims 1 to 5, wherein in the mobile ID transponder at least one of the first simultaneous low-frequency signals is received by means of the 3D-Antenna arrangement, and wherein, if the signal strength evaluation indicates a signal strength below a predetermined threshold in at least one of the spatial directions of the 3D-Antenna arrangement, the information relating to the spatial direction-dependent signal strengths in the control device causes another vehicle-side transmitting antenna to be driven for transmitting a further signal instead of one of the associated vehicle-side transmitting antennas.

9. Method according to one of the preceding claims,
wherein vehicle-side transmitting antennas for transmitting the further low-frequency signals are controlled in such a way that at least two vehicle-side transmitting antennas are controlled simultaneously, wherein the transmitting antennas are controlled with mutually changed signal strengths as a function of time in such a way that signals received superimposed in the ID transmitter have different field vectors as a function of time, wherein the plausibility check is carried out as a function of a time-dependent change in the field vectors.

## Revendications

1. Procédure de fonctionnement d'un système d'accès passif pour les véhicules à moteur,
Une pluralité d'antennes d'émission côté véhicule pour la transmission de signaux à basse fréquence à différentes positions spatiales étant disposées sur un véhicule, qui sont couplées à au moins un dispositif de commande, le dispositif de commande étant couplé à des moyens d'émission-réception côté véhicule pour la communication sans fil,
un émetteur ID mobile par rapport au véhicule étant conçu avec un agencement d'antennes de réception 3D pour la réception designaux à basse fréquence, dans lequel l'émetteur ID possède des moyens d'émission-réception côté clé pour la communication sans fil,
dans laquelle une première antenne d'émission sur le véhicule et une deuxième antenne d'émission sur le véhicule sont commandées à l'aide du dispositif de commande pour la transmission décalée dans le temps de premiers signaux basse fréquence décalés dans le temps avec des intensités de signal d'émission respectivement attribuées,
la première et la deuxième antenne d'émission du côté du véhicule étant commandées à l'aide du dispositif de commande pour la transmission simultanée de premiers signaux à basse fréquence avec des intensités de signal d'émission respectivement attribuées,
dans laquelle au moins un des signaux à basse fréquence décalés dans le temps ou simultanés est reçu dans l'émetteur ID mobile à l'aide de l'agencement d'antennes 3D et une évaluation de l'intensité du signal est effectuée pour chacune des directions spatiales, de sorte que des informations sur l'intensité du signal dépendant de la direction spatiale sont déterminées pour chaque direction spatiale de l'agencement d'antennes de réception 3D,
dans laquelle les informations relatives aux intensités de signal dépendant de la direction spatiale sont transmises sans fil de l'émetteur ID du moyen émetteur-récepteur côté clé au moyen émetteur-récepteur côté véhicule du dispositif de commande,
dans laquelle le dispositif de commande reçoit les informations relatives aux intensités de signal dépendant de la direction de l'espace et, en fonction des informations reçues, commande une ou plusieurs antennes de transmission du côté du véhicule pour la transmission décalée dans le temps ou simultanée d'autres signaux à basse fréquence, les intensités de signal de transmission respectivement attribuées étant sélectionnées en fonction des informations reçues relatives aux intensités de signal dépendant de la direction de l'espace,
dans laquelle, dans l'émetteur ID mobile, les autres signaux à basse fréquence sont reçus à l'aide de l'agencement d'antennes 3D et une évaluation de l'intensité du signal est effectuée pour chacune des directions spatiales, de sorte que d'autres informations sur l'intensité du signal en fonction de la direction spatiale sont déterminées pour chaque direction spatiale de l'agencement d'antennes 3D,
dans laquelle un contrôle de plausibilité est effectué en fonction des autres informations sur l'intensité du signal dépendant de la direction spatiale, dans lequel on vérifie si les informations sur l'intensité du signal dépendant de la direction spatiale sont cohérentes afin de détecter une extension du trajet du signal entre le véhicule et le transpondeur d'identification via des stations intermédiaires,
**caractérisé en ce que**
dans l'émetteur ID mobile, au moins un des premiers signaux à basse fréquence décalés dans le temps est reçu à l'aide de l'agencement d'antennes 3D, et dans lequel, si l'évaluation de l'intensité du signal indique une intensité de signal inférieure à un seuil prédéterminé dans au moins une des directions spatiales de l'agencement d'antennes 3D, les informations relatives aux intensités de signal dépendant de la direction spatiale dans lle dispositif de commande provoquent l'activation d'une autre antenne d'émission du côté du véhicule au lieu de l'antenne d'émission du côté du véhicule associée au signal afin de transmettre un autre signal.

2. Procédure selon la revendication 1, dans laquelle un identifiant unique de l'antenne d'émission respective est codé dans les signaux transmis par les antennes d'émission côté véhicule.

3. Procédure selon la revendication 1 ou 2, dans laquelle au moins un des premiers signaux à basse fréquence décalés dans le temps est reçu dans le transpondeur mobile à l'aide de l'agencement d'antennes 3D, et dans lequel, si l'évaluation de l'intensité du signal indique une surcharge dans au moins une des directions spatiales de l'agencement d'antennes 3D, les informations relatives aux intensités de signal dépendantes de la direction spatiale dans le dispositif de commande provoquent une réduction de la puissance d'émission de l'antenne d'émission associée du côté du véhicule.

4. Procédure selon l'une des revendications précédentes, dans laquelle, dans le transpondeur d'identification mobile, au moins l'un des premiers signaux à basse fréquence décalés dans le temps est reçu au moyen de l'agencement d'antenne 3D et dans laquelle, si l'évaluation de l'intensité du signal indique une intensité de signal inférieure à un seuil prédéterminé dans au moins une des directions spatiales de l'agencement d'antenne 3D, les informations relatives aux intensités de signal dépendant de la direction spatiale dans le dispositif de commande provoquent une augmentation de la puissance d'émission de l'antenne d'émission associée du côté du véhicule.

5. Procédure selon l'une des revendications précédentes, selon laquelle, dans le transpondeur mobile, on transmet exclusivement l'un des premiers signaux à basse fréquence décalés dans le temps à l'aide de l'agencement d'antenne 3D est reçu, et dans laquelle les informations relatives aux intensités de signal dépendantes de la direction spatiale dans le dispositif de commande font qu'une autre antenne d'émission du côté du véhicule est commandée pour transmettre un autre signal au lieu de l'antenne d'émission du côté du véhicule qui a transmis le signal non reçu dans le transpondeur d'identification.

6. Procédure selon l'une des revendications précédentes, dans laquelle, dans le transpondeur mobile d'identification, au moins l'un des premiers signaux simultanés à basse fréquence est reçu au moyen de l'agencement d'antennes 3D et dans laquelle, si l'évaluation de l'intensité du signal indique une intensité de signal inférieure à un seuil prédéterminé dans au moins une des directions spatiales de l'agencement d'antennes 3D, les informations relatives aux intensités de signal dépendant de la direction spatiale dans le dispositif de commande provoquent une augmentation ou une réduction de la puissance d'émission d'au moins une des antennes d'émission associées du côté du véhicule.

7. Procédure selon la revendication 6, dans laquelle, si l'évaluation de l'intensité du signal indique une intensité de signal inférieure à un seuil prédéterminé dans au moins une des directions spatiales de l'agencement d'antennes 3D, les informations concernant les intensités de signal dépendant de la direction spatiale dans le dispositif de commande provoquent une augmentation de la puissance d'émission d'au moins une des antennes de transmission embarquées associées et une réduction de la puissance d'émission d'une autre des antennes de transmission embarquées associées.

8. Procédure selon l'une quelconque des revendications 1 à 5, dans laquelle, dans le transpondeur d'identification mobile, au moins l'un des premiers signaux simultanés à basse fréquence est reçu au moyen de l'agencement d'antenne 3D, et dans laquelle, si l'évaluation de l'intensité du signal indique une intensité de signal inférieure à un seuil prédéterminé dans au moins une des directions spatiales de l'agencement d'antenne 3D, les informations relatives aux intensités de signal dépendant de la direction spatiale dans le dispositif de commande provoquent la commande d'une autre antenne d'émission côté véhicule pour la transmission d'un autre signal au lieu d'une des antennes d'émission associées côté véhicule.

9. Procédure selon l'une des revendications précédentes, dans laquelle des antennes d'émission côté véhicule pour la transmission des autres signaux à basse fréquence sont commandées de telle sorte qu'au moins deux antennes d'émission côté véhicule sont commandées simultanément, dans laquelle les antennes d'émission sont commandées avec des intensités de signal modifiées les unes par rapport aux autres en fonction du temps de telle sorte que des signaux reçus superposés dans l'émetteur ID présentent des vecteurs de champ différents en fonction du temps, dans laquelle le contrôle de plausibilité est effectué en fonction d'une modification des vecteurs de champ en fonction du temps.
